# EUROPEAN PATENT APPLICATION

(11) **EP 4 786 546 A1**
(43) Date of publication of application: **05.08.2026**
(21) Application number: 24871798.5
(22) Date of filing: 06.09.2024
(51) Int. Cl.: C08L 65/00, B60C 1/00, C08L 57/00

(54) **RUBBER COMPOSITION, CROSSLINKED RUBBER, AND TIRE**

(30) Priority: 26.09.2023 JP 2023163597
(71) Applicant: Zeon Corporation, Tokyo 100-8246 (JP)
(72) Inventor: SAKURAI, Takuro, Tokyo 100-8246 (JP); MARUYAMA, Yoshifumi, Tokyo 100-8246 (JP); NOZAWA, Atsushi, Tokyo 100-8246 (JP)
(74) Representative: Maiwald GmbH
(86) International application number: PCT/JP2024/032113
(87) International publication number: WO 2025/070000

(57) **Abstract**

Provided is a rubber composition comprising a ring-opened polymer rubber having a structural unit derived from a cycloolefin and having a glass transition temperature (Tg) of 0°C or lower, and a petroleum resin having a structural unit derived from a polycyclic aliphatic cycloolefin and having a glass transition temperature (Tg) of 10°C or higher.

## Description

### TECHNICAL FIELD

The present invention relates to a ring-opened polymer rubber, a rubber composition, a cross-linked rubber, and a tire.

### BACKGROUND ART

Important properties required for tires include chipping resistance (block chipping resistance). For example, Patent Document 1 examines a petroleum resin capable of imparting excellent cut resistance and chipping resistance to isoprene-based rubber. Patent Document 1 also discloses Example 2-1 in which a specific petroleum resin (B-1) is added to natural rubber and Example 2-2 in which a specific petroleum resin (B-2) is added to natural rubber.

### RELATED ART DOCUMENT

### PATENT DOCUMENT

Patent Document 1: WO 2022/255314

### SUMMARY OF THE INVENTION

### PROBLEM TO BE SOLVED BY THE INVENTION

However, a further improvement in chipping resistance has been required, which leads to a demand for a technique which can achieve more excellent chipping resistance than that provided by the technique disclosed in Patent Document 1.

The present invention has been made in consideration of such circumstances, and an object of the present invention is to provide a rubber composition which can provide a cross-linked rubber having excellent chipping resistance.

### MEANS FOR SOLVING PROBLEMS

The present inventors, who have conducted extensive research to achieve the above object, have found that the above object can be achieved by a rubber composition comprising a ring-opened polymer rubber having a structural unit derived from a cycloolefin and a petroleum resin having a structural unit derived from a polycyclic aliphatic cycloolefin, and have completed the present invention.

Specifically, the present invention provides a rubber composition, a cross-linked rubber, and a tire below.
[1] A rubber composition comprising a ring-opened polymer rubber having a structural unit derived from a cycloolefin and having a glass transition temperature (Tg) of 0°C or lower, and a petroleum resin having a structural unit derived from a polycyclic aliphatic cycloolefin and having a glass transition temperature (Tg) of 10°C or higher.
[2] The rubber composition according to [1], wherein the petroleum resin has a structural unit derived from dicyclopentadiene as the structural unit derived from a polycyclic aliphatic cycloolefin.
[3] The rubber composition according to [2], wherein the petroleum resin contains 20% by weight or more of the structural unit derived from dicyclopentadiene.
[4] The rubber composition according to any one of [1] to [3], wherein the ring-opened polymer rubber has a structural unit derived from cyclopentene as the structural unit derived from a cycloolefin.
[5] The rubber composition according to [4], wherein the ring-opened polymer rubber contains 20% by weight or more of the structural unit derived from cyclopentene.
[6] The rubber composition according to any one of [1] to [5], wherein the ring-opened polymer rubber has a structural unit derived from a norbornene compound as the structural unit derived from a cycloolefin.
[7] The rubber composition according to any one of [1] to [6], wherein the ring-opened polymer rubber contains 15% by weight or more of the structural unit derived from a norbornene compound.
[8] The rubber composition according to any one of [1] to [7], wherein the petroleum resin is contained in an amount of 1 to 50 parts by weight relative to 100 parts by weight of a rubber component containing the ring-opened polymer rubber.
[9] The rubber composition according to any one of [1] to [8], further comprising a filler.
[10] The rubber composition according to any one of [1] to [9], further comprising a cross-linking agent.
[11] A cross-linked rubber prepared by cross-linking the rubber composition according to any one of [1] to [10].
[12] A tire comprising the cross-linked rubber according to [11].

### EFFECTS OF THE INVENTION

The present invention provides a rubber composition which can provide a cross-linked rubber having excellent chipping resistance.

### DESCRIPTION OF EMBODIMENTS

The rubber composition according to the present invention comprises a ring-opened polymer rubber having a structural unit derived from a cycloolefin and a glass transition temperature (Tg) of 0°C or lower, and a petroleum resin having a structural unit derived from a polycyclic aliphatic cycloolefin and having a glass transition temperature (Tg) of 10°C or higher. Since the rubber composition according to the present invention contains such a ring-opened polymer rubber in combination with such a petroleum resin, the rubber composition can provide a cross-linked rubber having excellent chipping resistance. First, the ring-opened polymer rubber and the petroleum resin contained in the rubber composition according to the present invention will be described.

### <Ring-opened polymer rubber>

The ring-opened polymer rubber used in the present invention is a rubber which is obtained by ring-opening polymerization of a cycloolefin and which has a structural unit derived from a cycloolefin and has a glass transition temperature (Tg) of 0°C or lower.

Examples of the cycloolefin for forming the ring-opened polymer rubber used in the present invention include monocyclic cycloolefins; polycyclic cycloolefins such as norbornene compounds and polycyclic aromatic olefins (excluding norbornene compounds); and the like. The proportion of the structural unit derived from a cycloolefin contained in the ring-opened polymer rubber used in the present invention is preferably 80% by weight or more, more preferably 90% by weight or more, still more preferably substantially 100% by weight in the total repeating structural units.

Examples of the monocyclic cycloolefins include cyclic monoolefins such as cyclopropene, cyclobutene, cyclopentene, methylcyclopentene, cyclohexene, methylcyclohexene, cycloheptene, and cyclooctene; cyclic diolefins such as cyclopentadiene, methylcyclopentadiene, cyclohexadiene, methylcyclohexadiene, cyclooctadiene, and methylcyclooctadiene; cyclic triolefins such as cyclododecatriene; and the like. These monocyclic cycloolefins may be used alone or in combination.

The monocyclic cycloolefins are preferably cyclopentene, cyclohexene, cycloheptene, cyclooctene, and cyclooctadiene. From the viewpoint of more readily obtaining the effect of the present invention, more preferred are cyclopentene and cyclooctene, and still more preferred is cyclopentene.

The proportion of the monocyclic structural unit derived from a cycloolefin contained in the ring-opened polymer rubber used in the present invention is preferably 20 to 100% by weight, more preferably 30 to 100% by weight, still more preferably 40 to 100% by weight in the total repeating structural units, although not particularly limited thereto. When the proportion of the monocyclic structural unit derived from a cycloolefin falls within these ranges, a cross-linked rubber having sufficient wet grip properties and having more excellent chipping resistance is obtained. If more excellent wet grip properties are required, the proportion of the monocyclic structural unit derived from a cycloolefin is preferably 85% by weight or less, more preferably 75% by weight or less, still more preferably 65% by weight or less in the total repeating structural units.

When the ring-opened polymer rubber used in the present invention contains the structural unit derived from cyclopentene, the proportion of the structural unit derived from cyclopentene is preferably 20% by weight or more, more preferably 30% by weight or more, still more preferably 40% by weight or more in the total repeating structural units, although not particularly limited thereto. If more excellent wet grip properties are required, the proportion of the structural unit derived from cyclopentene is preferably 85% by weight or less, more preferably 75% by weight or less, still more preferably 65% by weight or less in the total repeating structural units.

The norbornene compound is a compound having a norbornene ring structure. The norbornene compound is preferably a norbornene compound represented by General Formula (1) below:

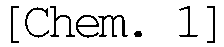

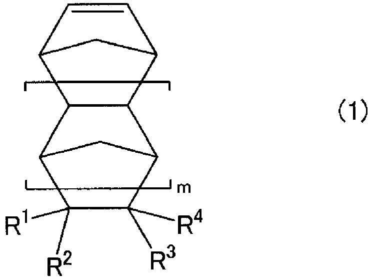

In the formula, R¹ to R⁴ are each a hydrogen atom, a hydrocarbon group having 1 to 20 carbon atoms, or a substituent containing a halogen atom, a silicon atom, an oxygen atom, or a nitrogen atom; R² and R³ may be bonded to each other to form a ring; and "m" is an integer of 0 to 2. In General Formula (1) above, R¹ to R⁴ may be the same or different.

In General Formula (1) above, "m" is preferably 0 or 1, more preferably 0 from the viewpoint of more readily obtaining the effect of the present invention.

In General Formula (1) above, from the viewpoint of more readily obtaining the effect of the present invention, R¹ to R⁴ are preferably a hydrogen atom, a chain hydrocarbon group having 1 to 20 carbon atoms, or a substituent containing a halogen atom, a silicon atom, an oxygen atom, or a nitrogen atom, and are more preferably a hydrogen atom, an alkyl group having 1 to 3 carbon atoms, or an alkenyl group having 1 to 3 carbon atoms.

When R² and R³ are bonded to each other to form a ring, suitable specific examples of the ring structure include a cyclopentane ring, a cyclopentene ring, a cyclohexane ring, a cyclohexene ring, a benzene ring, and the like. These may form a polycyclic structure, and may have a substituent. Among these, preferred are a cyclopentane ring, a cyclopentene ring, and a benzene ring. Particularly, preferred are a compound having a single cyclopentene ring or a compound having a polycyclic structure composed of a cyclopentane ring and a benzene ring. To be noted, besides R² and R³ which form a ring structure, R¹ and R⁴ may be the same or different, and are each preferably a hydrogen atom or an alkyl group having 1 to 3 carbon atoms. In this case, preferred is a compound represented by General Formula where "m" is 0.

Specific examples of the norbornene compound represented by General Formula (1) above include the following compounds:
bicyclo[2.2.1]hept-2-enes having no substituent or having a hydrocarbon substituent, such as 2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2-norbornene, 5-cyclohexenyl-2-norbornene, 5-cyclopentenyl-2-norbornene, 5-phenyl-2-norbornene, tetracyclo[9.2.1.0^{2,10}.0^{3,8}]tetradeca-3,5,7,12-tetraene (also referred to as 1,4-methano-1,4,4a,9a-tetrahydro-9H-fluorene), tetracyclo[10.2.1.0^{2,11}.0^{4,9}]pentadeca-4,6,8,13-tetraene (also referred to as 1,4-methano-1,4,4a,9,9a,10-hexahydroanthracene), dicyclopentadiene, tricyclopentadiene, methyldicyclopentadiene, and dihydrodicyclopentadiene (tricyclo[5.2.1.0^{2,6}]dec-8-ene);
tetracyclo[6.2.1.1^{3,6}.0^{2,7}]dodec-4-enes having no substituent or having a hydrocarbon substituent, such as tetracyclo[6.2.1.1^{3,6}.0^{2,7}]dodec-4-ene, 9-methyltetracyclo[6.2.1.1^{3,6}.0^{2,7}]dodec-4-ene, 9-ethyltetracyclo[6.2.1.1^{3,6}.0^{2,7}]dodec-4-ene, 9-cyclohexyltetracyclo[6.2.1.1^{3,6}.0^{2,7}]dodec-4-ene, 9-cyclopentyltetracyclo[6.2.1.1^{3,6}.0^{2,7}]dodec-4-ene, 9-methylenetetracyclo[6.2.1.1^{3,6}.0^{2,7}]dodec-4-ene, 9-ethylidene tetracyclo[6.2.1.1^{3,6}.0^{2,7}]dodec-4-ene, 9-vinyltetracyclo[6.2.1.1^{3,6}.0^{2,7}]dodec-4-ene, 9-propenyltetracyclo[6.2.1.1^{3,6}.0^{2,7}]dodec-4-ene, 9-cyclohexenyltetracyclo[6.2.1.1^{3,6}.0^{2,7}]dodec-4-ene, 9-cyclopentenyltetracyclo[6.2.1.1^{3,6}.0^{2,7}]dodec-4-ene, and 9-phenyltetracyclo[6.2.1.1^{3,6}.0^{2,7}]dodec-4-ene;
bicyclo[2.2.1]hept-2-enes having an alkoxycarbonyl group, such as methyl 5-norbornene-2-carboxylate, ethyl 5-norbornene-2-carboxylate, methyl 2-methyl-5-norbornene-2-carboxylate, and ethyl 2-methyl-5-norbornene-2-carboxylate;
tetracyclo[6.2.1.1^{3,6}.0^{2,7}]dodec-4-enes having an alkoxycarbonyl group, such as methyl tetracyclo[6.2.1.1^{3,6}.0^{2,7}]dodec-9-ene-4-carboxylate and methyl 4-methyltetracyclo[6.2.1.1^{3,6}.0^{2,7}]dodec-9-ene-4-carboxylate;
bicyclo[2.2.1]hept-2-enes having a hydroxycarbonyl group or an acid anhydride group, such as 5-norbornene-2-carboxylic acid, 5-norbornene-2,3-dicarboxylic acid, and 5-norbornene-2,3-dicarboxylic anhydride;
tetracyclo[6.2.1.1^{3,6}.0^{2,7}]dodec-4-enes having a hydroxycarbonyl group or an acid anhydride group, such as tetracyclo[6.2.1.1^{3,6}.0^{2,7}]dodec-9-ene-4-carboxylic acid, tetracyclo[6.2.1.1^{3,6}.0^{2,7}]dodec-9-ene-4,5-dicarboxylic acid, and tetracyclo[6.2.1.1^{3,6}.0^{2,7}]dodec-9-ene-4,5-dicarboxylic anhydride;
bicyclo[2.2.1]hept-2-enes having a hydroxyl group, such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, and 5-methyl-5-(2-hydroxyethoxycarbonyl)-2-norbornene;
tetracyclo[6.2.1.1^{3,6}.0^{2,7}]dodec-4-enes having a hydroxyl group, such as tetracyclo[6.2.1.1^{3,6}.0^{2,7}]dodec-9-ene-4-methanol and tetracyclo[6.2.1.1^{3,6}.0^{2,7}]dodec-9-ene-4-ol;
bicyclo[2.2.1]hept-2-enes having a hydrocarbonyl group, such as 5-norbornene-2-carbaldehyde;
tetracyclo[6.2.1.1^{3,6}.0^{2,7}]dodec-4-enes having a hydrocarbonyl group, such as tetracyclo[6.2.1.1^{3,6}.0^{2,7}]dodec-9-ene-4-carbaldehyde;
bicyclo[2.2.1]hept-2-enes having an alkoxycarbonyl group and a hydroxycarbonyl group, such as 3-methoxycarbonyl-5-norbornene-2-carboxylic acid;
bicyclo[2.2.1]hept-2-enes having a carbonyloxy group, such as 5-norbornene-2-yl acetate, 2-methyl-5-norbornene-2-yl acetate, 5-norbornene-2-yl acrylate, and 5-norbornene-2-yl methacrylate;
tetracyclo[6.2.1.1^{3,6}.0^{2,7}]dodec-4-enes having a carbonyloxy group, such as 9-tetracyclo[6.2.1.1^{3,6}.0^{2,7}]dodec-4-enyl acetate, 9-tetracyclo[6.2.1.1^{3,6}.0^{2,7}]dodec-4-enyl acrylate, and 9-tetracyclo[6.2.1.1^{3,6}.0^{2,7}]dodec-4-enyl methacrylate;
bicyclo[2.2.1]hept-2-enes having a functional group containing a nitrogen atom, such as 5-norbornene-2-carbonitrile, 5-norbornene-2-carboxamide, and 5-norbornene-2,3-dicarboxylic acid imide;
tetracyclo[6.2.1.1^{3,6}.0^{2,7}]dodec-4-enes having a functional group containing a nitrogen atom, such as tetracyclo[6.2.1.1^{3,6}.0^{2,7}]dodec-9-ene-4-carbonitrile, tetracyclo[6.2.1.1^{3,6}.0^{2,7}]dodec-9-ene-4-carboxamide, and tetracyclo[6.2.1.1^{3,6}.0^{2,7}]dodec-9-ene-4,5-dicarboxylic acid imide;
bicyclo[2.2.1]hept-2-enes having a halogen atom, such as 5-chloro-2-norbornene;
   tetracyclo[6.2.1.1^{3,6}.0^{2,7}]dodec-4-enes having a halogen atom, such as 9-chlorotetracyclo[6.2.1.1^{3,6}.0^{2,7}]dodec-4-ene;
bicyclo[2.2.1]hept-2-enes having a functional group containing a silicon atom, such as 5-trimethoxysilyl-2-norbornene and 5-triethoxysilyl-2-norbornene;
tetracyclo[6.2.1.1^{3,6}.0^{2,7}]dodec-4-enes having a functional group containing a silicon atom, such as 4-trimethoxysilyltetracyclo[6.2.1.1^{3,6}.0^{2,7}]dodec-9-ene and 4-triethoxysilyltetracyclo[6.2.1.1^{3,6}.0^{2,7}]dodec-9-ene.

To obtain a cross-linked rubber having sufficient wet grip properties and having more excellent chipping resistance, as the norbornene compounds represented by General Formula (1) above, bicyclo[2.2.1]hept-2-enes having no substituent or having a hydrocarbon substituent and tetracyclo[6.2.1.1^{3,6}.0^{2,7}]dodec-4-enes having no substituent or having a hydrocarbon substituent are preferred, 2-norbornene, dicyclopentadiene, and tetracyclo[6.2.1.1^{3,6}.0^{2,7}]dodec-4-ene are more preferred, and 2-norbornene and dicyclopentadiene are particularly preferred. These norbornene compounds may be used alone or in combination.

The proportion of the structural unit derived from a norbornene compound contained in the ring-opened polymer rubber used in the present invention is preferably 0 to 80% by weight, more preferably 0 to 70% by weight, still more preferably 0 to 60% by weight in the total repeating structural units, although not particularly limited thereto. When the proportion of the structural unit derived from a norbornene compound falls within these range, a cross-linked rubber having sufficient wet grip properties and having more excellent chipping resistance is obtained. If more excellent wet grip properties are required, the proportion of the structural unit derived from a norbornene compound is preferably 15% by weight or more, more preferably 25% by weight or more, still more preferably 35% by weight or more.

Examples of the polycyclic aromatic olefins (excluding the norbornene compounds) include phenylcyclooctene, 5-phenyl-1,5-cyclooctadiene, phenylcyclopentene, and the like. These polycyclic aromatic olefins may be used alone or in combination.

The structural unit derived from a cycloolefin in the ring-opened polymer rubber used in the present invention may be that derived from an aliphatic cycloolefin or may be that derived from an aromatic olefin. Preferred is that derived from an alicyclic cycloolefin. The proportion of the structural unit derived from an aliphatic cycloolefin in the ring-opened polymer rubber used in the present invention is preferably 60 to 100% by weight, more preferably 80 to 100% by weight, still more preferably substantially 100% by weight in the total repeating structural units, although not particularly limited thereto.

The ring-opened polymer rubber used in the present invention has a glass transition temperature (Tg) of 0°C or lower. The glass transition temperature (Tg) of the ring-opened polymer rubber is not particularly limited as long as it is 0°C or lower, and is preferably -100 to -10°C, more preferably -90 to -20°C, still more preferably -80 to - 30°C. When the glass transition temperature (Tg) of the ring-opened polymer rubber used in the present invention falls within these ranges, a rubber composition having excellent processability and rubber properties is obtained, and a cross-linked rubber having sufficient wet grip properties and having more excellent chipping resistance is obtained. The glass transition temperature (Tg) of the ring-opened polymer rubber can be controlled by adjusting the molecular weight and the polymer composition.

The weight average molecular weight (Mw) of the ring-opened polymer rubber used in the present invention is preferably 10,000 to 1,000,000, more preferably 50,000 to 800,0000, still more preferably 100,000 to 600,000 as measured against polystyrene standards by gel permeation chromatography. When the weight average molecular weight (Mw) falls within these ranges, a rubber composition having excellent processability and rubber properties is obtained, and a cross-linked rubber having sufficient wet grip properties and having more excellent chipping resistance is obtained.

The ring-opened polymer rubber used in the present invention has a cis/trans ratio of preferably 90/10 to 5/95, more preferably 70/30 to 10/90, still more preferably 50/50 to 15/85. The above-mentioned cis/trans ratio refers to the ratio (cis-to-trans ratio) of the cis structure to the trans structure in double bonds present in the repeating units contained in the ring-opened polymer rubber.

The ring-opened polymer rubber used in the present invention has a Mooney viscosity (ML1+4, 100°C) of preferably 20 to 150, more preferably 30 to 130, still more preferably 40 to 110. When the Mooney viscosity falls within these ranges, a rubber composition having excellent processability and rubber properties is obtained.

The ring-opened polymer rubber used in the present invention may have a modifying group at a polymer chain terminal. The modifying group introduced to the polymer chain terminal is not particularly limited, and is preferably a modifying group having an atom selected from the group consisting of atoms of Groups 15 and 16 in the Periodic Table and a silicon atom.

The modifying group for forming the terminal modifying group is more preferably a modifying group containing an atom selected from the group consisting of a nitrogen atom, an oxygen atom, a phosphorus atom, a sulfur atom, and a silicon atom because it can enhance the compatibility with a filler such as silica. Among these, preferred is a modifying group containing an atom selected from the group consisting of a nitrogen atom, an oxygen atom, and a silicon atom.

Examples of the modifying group containing a nitrogen atom include an amino group, a pyridyl group, an imino group, an amide group, a nitro group, a urethane bonding group, or a hydrocarbon group containing one of these groups. Examples of the modifying group containing an oxygen atom include a hydroxyl group, a carboxylic acid group, an ether group, an ester group, a carbonyl group, an aldehyde group, an epoxy group, or a hydrocarbon group containing one of these groups. Examples of the modifying group containing a silicon atom include alkylsilyl groups, oxysilyl groups, or a hydrocarbon group containing one of these groups. Examples of the modifying group containing a phosphorus atom include a phosphate group, a phosphino group, or a hydrocarbon group containing one of these groups. Examples of the modifying group containing a sulfur atom include a sulfonyl group, a thiol group, a thioether group, or a hydrocarbon group containing one of these groups. The modifying group may be a modifying group containing a plurality of these groups listed above. The oxysilyl group refers to a group having a silicon-oxygen bond.

Specific examples of oxysilyl groups include alkoxysilyl groups, aryloxysilyl groups, acyloxy groups, alkylsiloxysilyl groups, arylsiloxysilyl groups, and the like. Examples thereof also include a hydroxysilyl group resulting from hydrolysis of an alkoxysilyl group, an aryloxysilyl group, or an acyloxy group.

The alkoxysilyl group is a group composed of one or more alkoxy groups bonded to a silicon atom, and specific examples thereof include a trimethoxysilyl group, a (dimethoxy)(methyl)silyl group, a (methoxy)(dimethyl)silyl group, a (methoxy)(dichloro)silyl group, a triethoxysilyl group, a (diethoxy)(methyl)silyl group, an (ethoxy)(dimethyl)silyl group, a (dimethoxy)(ethoxy)silyl group, a (methoxy)(diethoxy)silyl group, a tripropoxysilyl group, a tris(trimethylsiloxy)silyl group, and the like.

The proportion of the modifying group introduced to the polymer chain terminal of the ring-opened polymer rubber used in the present invention is not particularly limited. The proportion can be 10% or more as the percentage of the number of ring-opened polymer rubber chain terminals to which the modifying group is introduced, in the total number of ring-opened polymer rubber chain terminals.

### <Method of producing ring-opened polymer rubber>

The ring-opened polymer rubber according to the present invention can be produced by any method without limitation. Examples of the method include a method of polymerizing a cycloolefin in the presence of a ring-opening polymerization catalyst.

The ring-opening polymerization catalyst can be any ring-opening polymerization catalyst as long as it can ring-opening polymerize a cycloolefin. Among these, preferred are ruthenium carbene complexes and so-called Ziegler-Natta catalysts. These ring-opening polymerization catalysts may be used alone or in combination.

Specific examples of ruthenium carbene complexes include bis(tricyclohexylphosphine)benzylidene ruthenium dichloride, bis(triphenylphosphine)-3,3-diphenylpropenylidene ruthenium dichloride, bis(tricyclohexylphosphine)t-butylvinylidene ruthenium dichloride, dichloro-(3-phenyl-1H-inden-1-ylidene)bis(tricyclohexylphosphine)ruthenium, bis(1,3-diisopropylimidazolin-2-ylidene)benzylidene ruthenium dichloride, bis(1,3-dicyclohexylimidazolin-2-ylidene)benzylidene ruthenium dichloride, (1,3-dimesitylimidazolin-2-ylidene)(tricyclohexylphosphine)benzylidene ruthenium dichloride, (1,3-dimesitylimidazolidin-2-ylidene)(tricyclohexylphosphine)benzylidene ruthenium dichloride, bis(tricyclohexylphosphine)ethoxymethylidene ruthenium dichloride, and (1,3-dimesitylimidazolidin-2-ylidene)(tricyclohexylphosphine)ethoxymethylidene ruthenium dichloride.

The Ziegler-Natta catalyst is a mixed catalyst of a Group VI transition metal compound in the Periodic Table and an organoaluminum compound. Specific examples of Group VI transition metal compound in the Periodic Table include molybdenum compounds such as molybdenum pentachloride, molybdenum oxotetrachloride, molybdenum (phenylimide)tetrachloride, tridodecylammonium molybdate, methyltrioctylammonium molybdate, tridecylammonium molybdate, trioctylammonium molybdate, and tetraphenylammonium molybdate; tungsten compounds such as tungsten hexachloride, tungsten oxotetrachloride, tungsten (phenylimide)tetrachloride, monocatecholate tungsten tetrachloride, bis(3,5-di-tertiary-butyl)catecholate tungsten dichloride, bis(2-chloroetherate)tetrachloride, and tungsten oxotetraphenolate; and the like.

Specific examples of an organoaluminum compound contained in the Ziegler-Natta catalyst include diethylaluminum ethoxide, diethylaluminum isopropoxide, diisobutylaluminum butoxide, diisobutylaluminum hexoxide, diethylaluminum (2-trichloroethoxide), diethylaluminum (2-tribromoethoxide), diethylaluminum (1,3-dichloro-2-propoxide), diethylaluminum (1,1,1,3,3,3-hexafluoro-2-propoxide), diethylaluminum (1,1,1-trichloro-2-methyl-2-propoxide), diethylaluminum (2,6-diisopropylphenoxide), ethylaluminum di(2-trichloroethoxide), ethylaluminum di(2-tribromoethoxide), ethylaluminum di(1,3-dichloro-2-propoxide), ethylaluminum di(1,1,1,3,3,3-hexafluoro-2-propoxide), ethylaluminum di(1,1,1-trichloro-2-methyl-2-propoxide), ethylaluminum bis(2,6-diisopropylphenoxide), ethyl(chloro)aluminum ethoxide, ethyl(chloro)aluminum isopropoxide, ethyl(chloro)aluminum butoxide, ethyl(chloro)aluminum (2-trichloroethoxide), ethyl(chloro)aluminum (2-tribromoethoxide), ethyl(bromo)aluminum (1,3-dichloro-2-propoxide), ethyl(chloro)aluminum (1,1,1,3,3,3-hexafluoro-2-propoxide), ethyl(chloro)aluminum (1,1,1-trichloro-2-methyl-2-propoxide), ethyl(chloro)aluminum (2,6-diisopropyl phenoxide), and the like.

For the amount of the ring-opening polymerization catalyst to be used, the molar ratio of the ring-opening polymerization catalyst to the monomer used in polymerization is in the range of usually 1:500 to 1:2,000,000, preferably 1:700 to 1:1,500,000, more preferably 1:1,000 to 1:1,000,000.

The polymerization reaction may be performed without a solvent, or may be performed in a solution. When polymerization is performed in a solution, the solvent used can be any solvent as long as it is inactive in the polymerization reaction and can dissolve the cycloolefin, the polymerization catalyst, and others used in polymerization. Use of a hydrocarbon-based solvent or a halogen-based solvent is preferred. Examples of the hydrocarbon-based solvent include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. Examples of the halogen-based solvent include alkyl halogens such as dichloromethane and chloroform; aromatic halogens such as chlorobenzene and dichlorobenzene; and the like. These solvents may be used alone, or may be used in combination as a mixture.

When the cycloolefin is ring-opening polymerized, as needed, an olefin compound or a diolefin compound as a molecular weight modifier may be added to the polymerization reaction system to adjust the molecular weight of the resulting ring-opened polymer rubber.

The olefin compound can be any olefin compound as long as it is an organic compound having an ethylenically unsaturated bond. Examples thereof include α-olefins such as 1-butene, 1-pentene, 1-hexene, and 1-octene; styrenes such as styrene and vinyltoluene; halogen-containing vinyl compounds such as allyl chloride; vinyl ethers such as ethyl vinyl ether and i-butyl vinyl ether; amine-containing vinyl compounds such as allylamine, N,N-dimethylallylamine, and N,N-diethylallylamine; disubstituted olefins such as 2-butene and 3-hexene; and the like.

Examples of the diolefin compound include non-conjugated diolefins such as 1,4-pentadiene, 1,4-hexadiene, 1,5-hexadiene, 1,6-heptadiene, 2-methyl-1,4-pentadiene, and 2,5-dimethyl-1,5-hexadiene.

The amount of the olefin compound and the diolefin compound used as a molecular weight modifier can be appropriately selected according to the molecular weight of the ring-opened polymer rubber to be produced. The molar ratio of the amount thereof to the amount of the monomer used in polymerization is in the range of usually 1/100 to 1/100,000, preferably 1/200 to 1/50,000, more preferably 1/500 to 1/10,000.

In the case where the ring-opened polymer rubber used in the present invention is prepared as a polymer rubber having a modifying group at a polymer chain terminal, it is preferred that as the molecular weight modifier, a modifying group-containing olefinically unsaturated hydrocarbon compound be used instead of the above-mentioned olefin compound or diolefin compound. By using such a modifying group-containing olefinically unsaturated hydrocarbon compound, the modifying group can be suitably introduced to a polymer chain terminal of the ring-opened polymer rubber obtained through polymerization.

The modifying group-containing olefinically unsaturated hydrocarbon compound can be a compound having a modifying group and having one olefinic carbon-carbon double bond with metathesis reactivity, and is not particularly limited. For example, when it is desired that an oxysilyl group is introduced to a polymer chain terminal of the ring-opened polymer rubber, it is sufficient that an oxysilyl group-containing olefinically unsaturated hydrocarbon is present in the polymerization reaction system.

Examples of such an oxysilyl group-containing olefinically unsaturated hydrocarbon which introduces a modifying group to only one of terminals (one terminal) of the polymer chain of the ring-opened polymer rubber include alkoxysilane compounds such as vinyl(trimethoxy)silane, vinyl(triethoxy)silane, allyl(trimethoxy)silane, allyl(methoxy)(dimethyl)silane, allyl(triethoxy)silane, allyl(ethoxy)(dimethyl)silane, styryl(trimethoxy)silane, styryl(triethoxy)silane, styrylethyl(triethoxy)silane, allyl(triethoxysilylmethyl)ether, and allyl(triethoxysilylmethyl)(ethyl)amine; aryloxysilane compounds such as vinyl(triphenoxy)silane, allyl(triphenoxy)silane, and allyl(phenoxy)(dimethyl)silane; acyloxysilane compounds such as vinyl(triacetoxy)silane, allyl(triacetoxy)silane, allyl(diacetoxy)methylsilane, and allyl(acetoxy)(dimethyl)silane; alkylsiloxysilane compounds such as allyltris(trimethylsiloxy)silane; arylsiloxysilane compounds such as allyltris(triphenylsiloxy)silane; polysiloxane compounds such as 1-allylheptamethyltrisiloxane, 1-allylnonamethyltetrasiloxane, 1-allylnonamethylcyclopentasiloxane, and 1-allylundecamethylcyclohexasiloxane; and the like.

Examples of an oxysilyl group-containing olefinically unsaturated hydrocarbon which introduces a modifying group to both of the terminals (both terminals) of the polymer chain of the ring-opened polymer rubber include alkoxysilane compounds such as bis(trimethoxysilyl)ethylene, bis(triethoxysilyl)ethylene, 2-butene-1,4-di(trimethoxysilane), 2-butene-1,4-di(triethoxysilane), and 1,4-di(trimethoxysilylmethoxy)-2-butene; aryloxysilane compounds such as 2-butene-1,4-di(triphenoxysilane); acyloxysilane compounds such as 2-butene-1,4-di(triacetoxysilane); alkylsiloxysilane compounds such as 2-butene-1,4-di[tris(trimethylsiloxy)silane]; arylsiloxysilane compounds such as 2-butene-1,4-di[tris(triphenylsiloxy)silane]; polysiloxane compounds such as 2-butene-1,4-di(heptamethyltrisiloxane) and 2-butene-1,4-di(undecamethylcyclohexasiloxane); and the like.

The modifying group-containing olefinically unsaturated hydrocarbon compounds such as oxysilyl group-containing olefinically unsaturated hydrocarbon compounds not only act to introduce the modifying group to a polymer chain terminal of the ring-opened polymer rubber, but also act as molecular weight modifiers. The amount of the modifying group-containing olefinically unsaturated hydrocarbon compound to be used can be appropriately selected according to the molecular weight of the ring-opened polymer rubber to be produced. The molar ratio of the amount thereof to the amount of the monomer used in polymerization is in the range of usually 1/100 to 1/100,000, preferably 1/200 to 1/50,000, more preferably 1/500 to 1/10,000.

The polymerization reaction temperature is preferably -100°C or higher, more preferably -50°C or higher, still more preferably 0°C or higher, particularly preferably 20°C or higher, although not particularly limited thereto. The upper limit of the polymerization reaction temperature is preferably less than 100°C, more preferably less than 90°C, still more preferably less than 80°C, particularly preferably less than 70°C, although not particularly limited thereto. The polymerization reaction time is preferably 1 minute to 72 hours, more preferably 10 minutes to 20 hours, although not particularly limited thereto.

To the ring-opened polymer rubber obtained by the polymerization reaction, an antioxidant such as a phenol-based stabilizer, a phosphorus-based stabilizer, or a sulfur-based stabilizer may be added as needed. The amount of the antioxidant to be added can be appropriately determined according to the type thereof. Furthermore, extender oil may be blended as needed. When the ring-opened polymer rubber is obtained as a polymerization solution, a known recovery method can be used to recover the ring-opened polymer rubber from the polymerization solution. For example, a method of separating the solvent by steam stripping or the like, and then filtering off a solid, followed by further drying of the solid to obtain a solid ring-opened polymer rubber; a method of directly devolatilizing the solvent and the like with a biaxial heating dryer or the like to obtain a solid ring-opened polymer rubber; a method of reprecipitating the product with a poor solvent, separating the solvent, and then filtering off the solid, followed by further drying of the solid to obtain a solid ring-opened polymer rubber; and the like can be used.

### <Petroleum resin>

In addition to the above-mentioned ring-opened polymer rubber, the rubber composition according to the present invention contains a petroleum resin having a structural unit derived from a polycyclic aliphatic cycloolefin and having a glass transition temperature (Tg) of 10°C or higher.

The polycyclic aliphatic cycloolefin for forming the petroleum resin used in the present invention is preferably an aliphatic norbornene compound. Specific examples of the aliphatic norbornene compound include the aliphatic compounds among the above-mentioned norbornene compounds exemplified as the cycloolefin for forming the ring-opened polymer rubber.

As the polycyclic aliphatic cycloolefin for forming the petroleum resin used in the present invention, among bicyclo[2.2.1]hept-2-enes having no substituent or having a hydrocarbon substituent and tetracyclo[6.2.1.1^{3,6}.0^{2,7}]dodec-4-enes having no substituent or having a hydrocarbon substituent, more preferred are aliphatic compounds, particularly preferred are dicyclopentadiene, tetracyclo[6.2.1.1^{3,6}.0^{2,7}]dodec-4-ene, 2-norbornene, 5-ethylidene-2-norbornene, and tricyclopentadiene, and most preferred is dicyclopentadiene. These polycyclic aliphatic cycloolefins may be used alone or in combination.

The proportion of the structural unit derived from a polycyclic aliphatic cycloolefin in the petroleum resin used in the present invention is preferably 20 to 100% by weight, more preferably 30 to 99% by weight, still more preferably 32 to 97% by weight, particularly preferably 35 to 95% by weight in the total repeating structural units, although not particularly limited thereto. When the proportion of the structural unit derived from a polycyclic aliphatic cycloolefin falls within these ranges, a cross-linked rubber having sufficient wet grip properties and having more excellent chipping resistance is obtained. If more excellent chipping resistance is required, the proportion of the structural unit derived from a polycyclic aliphatic cycloolefin is preferably 50% by weight or more, more preferably 60% by weight or more, still more preferably 70% by weight or more.

When the petroleum resin used in the present invention has the structural unit derived from dicyclopentadiene, the proportion of the structural unit derived from dicyclopentadiene is preferably 20% by weight or more, more preferably 30 to 99% by weight, still more preferably 32 to 97% by weight, particularly preferably 35 to 95% by weight in the total repeating structural units, although not particularly limited thereto. When the proportion of the structural unit derived from dicyclopentadiene falls within these ranges, a cross-linked rubber having sufficient wet grip properties and having more excellent chipping resistance is obtained. If more excellent chipping resistance is required, the proportion of the structural unit derived from dicyclopentadiene is preferably 50% by weight or more, more preferably 60% by weight or more, still more preferably 70% by weight or more.

The petroleum resin used in the present invention may further contain a structural unit derived from an acyclic diolefin having 4 to 6 carbon atoms. Examples of acyclic diolefins having 4 to 6 carbon atoms include 1,3-pentadiene, 1,3-butadiene, 1,2-butadiene, isoprene, 1,3-hexadiene, 1,4-pentadiene, and the like. Among these, preferred are 1,3-pentadiene and isoprene. These acyclic diolefins having 4 to 6 carbon atoms may be used alone or in combination.

The proportion of the structural unit derived from an acyclic diolefin having 4 to 6 carbon atoms in the petroleum resin used in the present invention is preferably 0 to 40% by weight, more preferably 1 to 30% by weight, still more preferably 3 to 25% by weight, particularly preferably 5 to 20% by weight in the total repeating structural units, although not particularly limited thereto. When the proportion of the structural unit derived from an acyclic diolefin having 4 to 6 carbon atoms falls within these ranges, a cross-linked rubber having sufficient wet grip properties and having more excellent chipping resistance is obtained.

The petroleum resin used in the present invention may further contain a structural unit derived from an aromatic monoolefin having 8 to 10 carbon atoms. Example of aromatic monoolefins having 8 to 10 carbon atoms include styrene and C9 fraction. The C9 fraction mainly contains styrene, α-methylstyrene, β-methylstyrene, vinyltoluene, and indene as aromatic monomers. These aromatic monoolefins having 8 to 10 carbon atoms may be used alone or in combination.

The proportion of the structural unit derived from an aromatic monoolefin having 8 to 10 carbon atoms in the petroleum resin used in the present invention is preferably 0 to 50% by weight in the total repeating structural units, although not particularly limited thereto. If more excellent chipping resistance is required, the proportion of the structural unit derived from an aromatic monoolefin having 8 to 10 carbon atoms is preferably 40% by weight or less, more preferably 30% by weight or less, still more preferably 20% by weight or less, particularly preferably 10% by weight or less.

The petroleum resin used in the present invention may further contain a different monomer unit in the range demonstrating the effect of the present invention. Examples of a different monomer for forming the different monomer unit (monomer other than polycyclic aliphatic cycloolefins, acyclic diolefins having 4 to 6 carbon atoms, and aromatic monoolefins) include monocyclic alicyclic monoolefins having 4 to 6 carbon atoms, aromatic monoolefins, acyclic monoolefins having 4 to 8 carbon atoms, monocyclic alicyclic diolefins, and the like. These different monomers may be used alone or in combination.

Examples of monocyclic alicyclic monoolefins having 4 to 6 carbon atoms include cyclobutene, cyclopentene, cyclohexene, methylcyclobutene, methylcyclopentene, and the like.

Examples of acyclic monoolefins having 4 to 8 carbon atoms include 1-butene, 2-butene, isobutylene (2-methylpropene), 1-pentene, 2-pentene, 2-methyl-1-butene, 3-methyl-1-butene, 2-methyl-2-butene, 1-hexene, 2-hexene, 2-methyl-1-pentene, 1-heptene, 2-heptene, 2-methyl-1-hexene, 1-octene, 2-octene, 2-methyl-1-heptene, diisobutylenes (2,4,4-trimethyl-1-pentene and 2,4,4-trimethyl-1-pentene), and the like.

Examples of monocyclic alicyclic diolefins include cyclopentadiene, methylcyclopentadiene, and the like.

Besides these, as the different monomer, monocyclic alicyclic monoolefins having 7 or more carbon atoms, such as cycloheptene; acyclic monoolefins having carbon atoms excluding 4 to 8 carbon atoms, such as ethylene, propylene, and nonene; and the like can be used.

The proportion of the structural unit derived from a different monomer (monomer other than polycyclic aliphatic cycloolefins, acyclic diolefins having 4 to 6 carbon atoms, and aromatic monoolefins) in the petroleum resin used in the present invention is preferably 0 to 40% by weight, more preferably 0 to 20% by weight, still more preferably 0 to 10% by weight, particularly preferably substantially 0% by weight in the total repeating structural units, although not particularly limited thereto.

The petroleum resin used in the present invention has a glass transition temperature (Tg) of 10°C or higher. The glass transition temperature (Tg) of the petroleum resin is particularly limited as long as it is 10°C or higher. The glass transition temperature is preferably 20 to 100°C, more preferably 30 to 90°C, still more preferably 35 to 85°C, particularly preferably 50 to 80°C. When the glass transition temperature (Tg) of the ring-opened polymer rubber used in the present invention falls within these ranges, a cross-linked rubber having sufficient wet grip properties and having more excellent chipping resistance is obtained. The glass transition temperature (Tg) of the petroleum resin can be controlled by adjusting the molecular weight and the polymer composition, for example.

The weight average molecular weight (Mw) of the petroleum resin used in the present invention is preferably 400 to 8,000, more preferably 600 to 5,000, still more preferably 700 to 3,000, particularly preferably 750 to 1,700 as measured against polystyrene standards by gel permeation chromatography. When the weight average molecular weight (Mw) falls within these ranges, a rubber composition having excellent processability and rubber properties is obtained, and a cross-linked rubber having sufficient wet grip properties and having more excellent chipping resistance is obtained.

The softening point of the petroleum resin used in the present invention is preferably 70 to 160°C, more preferably 80 to 150°C, still more preferably 90 to 145°C, particularly preferably 98 to 140°C. When the softening point falls within these ranges, a rubber composition having excellent processability and rubber properties is obtained, and a cross-linked rubber having sufficient wet grip properties and having more excellent chipping resistance is obtained. The softening point can be measured according to JIS K 6863.

### <Method of producing petroleum resin>

The petroleum resin used in the present invention can be produced by any method without limitation. Examples thereof include a method of addition polymerizing polymerizable components including a polycyclic aliphatic cycloolefin, and an acyclic diolefin having 4 to 6 carbon atoms, an aromatic monoolefin, and a different monomer which are optionally used.

Examples of the method of producing the petroleum resin which is suitably used include a thermal polymerization method of causing a thermal polymerization reaction by heating the monomer components.

The polymerization temperature when the thermal polymerization reaction is performed is in the range of preferably 150°C to 350°C, more preferably 240°C to 300°C, although not particularly limited thereto. When the polymerization temperature falls within these ranges, favorable polymerization activity can be obtained, and reactions other than the target polymerization reaction can be suppressed. The polymerization reaction may be performed under the atmospheric pressure or under an increased pressure. The polymerization reaction time can be appropriately selected from the range of usually 10 minutes to 12 hours, preferably 30 minutes to 6 hours.

The polymerization system for the thermal polymerization reaction may contain a solvent. Examples of the solvent to be used include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. These solvents may be used alone, or may be used in combination as a mixture.

The polymerization reaction can be terminated by reducing the temperature after the desired polymerization conversion ratio is reached.

Alternatively, the petroleum resin used in the present invention can be obtained by addition polymerization using a Friedel-Crafts type cationic polymerization catalyst. A known method can be used as the polymerization method in this case.

It is sufficient that the method of producing the petroleum resin includes at least the above-mentioned polymerization step. The method may include an additional step as needed.

Examples of the additional step include a recovery step of, after the termination of the polymerization reaction in the polymerization step, removing unreacted monomers and the solvent, and further removing low molecular weight oligomer components by steam distillation or the like, followed by cooling to give a solid petroleum resin; and the like.

### <Rubber composition>

The rubber composition according to the present invention comprises the above-mentioned ring-opened polymer rubber and the above-mentioned petroleum resin.

The content of the petroleum resin relative to 100 parts by weight of a rubber component containing the ring-opened polymer rubber in the rubber composition according to the present invention is preferably 1 to 50 parts by weight, more preferably 3 to 40 parts by weight, still more preferably 5 to 30 parts by weight, although not particularly limited thereto. When the content of the petroleum resin relative to 100 parts by weight of the rubber component falls within these ranges, a rubber composition having excellent processability and rubber properties is obtained, and a cross-linked rubber having sufficient wet grip properties and having more excellent chipping resistance is obtained. If more excellent chipping resistance and wet grip properties are required, the content of the petroleum resin relative to 100 parts by weight of the rubber component containing the ring-opened polymer rubber is preferably 10 parts by weight or more, more preferably 15 parts by weight or more, still more preferably 18 parts by weight or more.

In addition to the above-mentioned ring-opened polymer rubber and the above-mentioned petroleum resin, the rubber composition according to the present invention can contain necessary amounts of compounding agents such as a filler, a cross-linking agent, a cross-linking accelerator, a cross-linking activator, an antioxidant, an activating agent, a process oil, a plasticizer, and a lubricant.

Examples of the filler include carbon black, silica, calcium carbonate, talc, and the like. These fillers are used alone or in combination.

Examples of carbon black include furnace black, acetylene black, thermal black, channel black, graphite, and the like. Among these, preferred is furnace black. Specific examples thereof include SAF, ISAF, ISAF-HS, ISAF-LS, IISAF-HS, HAF, HAF-HS, HAF-LS, FEF, and the like. These carbon blacks can be used alone or in combination.

The nitrogen adsorption specific surface area (N₂SA) of carbon black is preferably 5 to 200 m²/g, more preferably 70 to 120 m²/g, and the dibutyl phthalate (DBP) adsorption amount is preferably 5 to 300 ml/100 g, more preferably 80 to 160 ml/100 g.

The content of the carbon black in the rubber composition according to the present invention is preferably 1 to 150 parts by weight, more preferably 10 to 120 parts by weight, still more preferably 20 to 100 parts by weight, particularly preferably 30 to 80 parts by weight relative to 100 parts by weight of the rubber component containing the ring-opened polymer rubber in the rubber composition. When the content of carbon black falls within these ranges, a cross-linked rubber having sufficient wet grip properties and having more excellent chipping resistance is obtained.

Examples of silica include, but should not be particularly limited to, dry white carbon, wet white carbon, colloidal silica, precipitated silica, and the like. A carbon-silica dual phase filler having silica supported on the surface of carbon black may be used. The content of silica in the rubber composition according to the present invention is preferably 0 to 100 parts by weight, more preferably 0 to 50 parts by weight, still preferably 0 to 20 parts by weight relative to 100 parts by weight of the rubber component containing the ring-opened polymer rubber in the rubber composition.

When silica is blended with the rubber composition according to the present invention, it is preferred that a silane coupling agent be further blended to further improve compatibility of the ring-opened polymer rubber with silica. The amount of the silane coupling agent to be blended is preferably 0.1 to 30 parts by weight, more preferably 1 to 15 parts by weight relative to 100 parts by weight of silica.

Examples of the cross-linking agent include sulfurs such as powdered sulfur, precipitated sulfur, colloidal sulfur, insoluble sulfur, and highly dispersible sulfur; halogenated sulfurs such as sulfur monochloride and sulfur dichloride; organic peroxides such as dicumyl peroxide and di-tertiary-butyl peroxide; quinone dioximes such as p-quinone dioxime and p,p'-dibenzoyl quinone dioxime; organic polyamine compounds such as triethylenetetramine, hexamethylenediamine carbamate, and 4,4'-methylene bis-o-chloroaniline; alkyl phenol resins having a methylol group; and the like. Among these, preferred are sulfurs, and more preferred is powdered sulfur. These cross-linking agents are used alone or in combination. The amount of the cross-linking agent to be blended is preferably 0.1 to 15 parts by weight, more preferably 0.5 to 5 parts by weight relative to 100 parts by weight of the rubber component containing the ring-opened polymer rubber in the rubber composition.

Examples of the cross-linking accelerator include sulfenamide-based cross-linking accelerators such as N-cyclohexyl-2-benzothiazolylsulfenamide, N-(tert-butyl)-2-benzothiazolylsulfenamide, N-oxyethylene-2-benzothiazolylsulfenamide, N-oxyethylene-2-benzothiazolylsulfenamide, and N,N'-diisopropyl-2-benzothiazolylsulfenamide; guanidine-based cross-linking accelerators such as 1,3-diphenylguanidine, 1,3-diorthotolylguanidine, and 1-ortho-tolylbiguanidine; thiourea-based cross-linking accelerators such as diethylthiourea; thiazole-based cross-linking accelerators such as 2-mercaptobenzothiazole, dibenzothiazyl disulfide, and zinc 2-mercaptobenzothiazole; thiuram-based cross-linking accelerators such as tetramethylthiuram monosulfide and tetramethylthiuram disulfide; dithiocarbamic acid-based cross-linking accelerators such as sodium dimethyldithiocarbamate and zinc diethyldithiocarbamate; xanthic acid-based cross-linking accelerators such as sodium isopropyl xanthate, zinc isopropyl xanthate, and zinc butyl xanthate; and the like. Among these, preferred are those containing a sulfenamide-based cross-linking accelerator. These cross-linking accelerators are used alone or in combination. The amount of the cross-linking accelerator to be blended is preferably 0.1 to 15 parts by weight, more preferably 0.5 to 5 parts by weight relative to 100 parts by weight of the rubber component containing the ring-opened polymer rubber in the rubber composition.

As the cross-linking activator, a higher fatty acid such as stearic acid, or zinc oxide can be used, for example. The amount of the cross-linking activator to be blended is appropriately selected. The amount of the higher fatty acid to be blended is preferably 0.05 to 15 parts by weight, more preferably 0.5 to 5 parts by weight relative to 100 parts by weight of the rubber component containing the ring-opened polymer rubber in the rubber composition. The amount of zinc oxide to be blended is preferably 0.05 to 10 parts by weight, more preferably 0.5 to 5 parts by weight relative to 100 parts by weight of the rubber component containing the ring-opened polymer rubber in the rubber composition.

As the process oil, a mineral oil or a synthetic oil may be used. As the mineral oil, an aromatic oil, a naphthene oil, a paraffin oil, or the like is usually used. The amount of the process oil to be blended is preferably 1 to 30 parts by weight, more preferably 3 to 20 parts by weight relative to 100 parts by weight of the rubber component containing the ring-opened polymer rubber in the rubber composition.

Examples of other compounding agents include activating agents such as diethylene glycol, polyethylene glycol, and silicone oil; wax; and the like.

The rubber composition according to the present invention may contain a rubber other than the above-mentioned ring-opened polymer rubber, as the rubber component. Examples of the rubber other than the above-mentioned ring-opened polymer rubber include natural rubber (NR), polyisoprene rubber (IR), emulsion polymerized SBR (styrene-butadiene copolymer rubber), solution polymerized random SBR (bonded styrene: 5 to 50% by weight, 1,2-bond content of butadiene moiety: 10 to 80%), high trans SBR (trans bond content of butadiene moiety: 70 to 95%), low cis BR (polybutadiene rubber), high cis BR, high trans BR (trans bond content of butadiene moiety: 70 to 95%), ethylene-propylene-diene rubber (EPDM), styrene-isoprene copolymer rubber, butadiene-isoprene copolymer rubber, emulsion polymerized styrene-acrylonitrile-butadiene copolymer rubber, acrylonitrile-butadiene copolymer rubber, high vinyl SBR-low vinyl SBR block copolymerized rubber, polyisoprene-SBR block copolymerized rubber, polystyrene-polybutadiene-polystyrene block copolymer, acrylic rubber, epichlorohydrin rubber, fluorocarbon rubber, silicon rubber, ethylene-propylene rubber, urethane rubber, and the like. These rubbers can be used alone or in combination.

In the rubber composition according to the present invention, the content of the ring-opened polymer rubber used in the present invention is preferably 30 to 100 parts by weight, more preferably 40 to 100 parts by weight, still more preferably 50 to 100 parts by weight relative to 100 parts by weight of the total amount of the rubber component. On the other hand, the content of the rubber other than the ring-opened polymer rubber used in the present invention in the rubber composition according to the present invention is preferably 0 to 70 parts by weight, more preferably 0 to 60 parts by weight, still more preferably 0 to 50 parts by weight relative to 100 parts by weight of the total amount of the rubber component.

The rubber composition according to the present invention can be obtained by kneading the components by an ordinary method. For example, the rubber composition can be obtained by kneading the compounding agents excluding the cross-linking agent and the cross-linking accelerator with the rubber component such as the ring-opened polymer rubber, and thereafter mixing the kneaded product with the cross-linking agent and the cross-linking accelerator. The kneading temperature for kneading the compounding agents excluding the cross-linking agent and the cross-linking accelerator with the rubber components excluding the ring-opened polymer rubber is preferably 20 to 200°C, more preferably 30 to 180°C, and the kneading time is preferably 30 seconds to 30 minutes. Mixing of the cross-linking agent and the cross-linking accelerator is performed after the kneaded product is cooled to usually 100°C or lower, preferably 80°C or lower.

### <Cross-linked rubber>

The cross-linked rubber according to the present invention is prepared by cross-linking the above-mentioned rubber composition according to the present invention.

The cross-linked rubber according to the present invention can be produced using the rubber composition according to the present invention, for example, by shaping the rubber composition with a molding machine having a desired shape, such as an extruder, an injection molding machine, a press, or a roll, and performing a cross-linking reaction by heating to provide a cross-linked rubber having a fixed shape. In this case, the cross-linking may be performed after the shaping is performed in advance, or may be performed simultaneously with the shaping. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As the heating method, a common method used in cross-linking of the rubber, such as press heating, steam heating, oven heating, or hot air heating, may be appropriately selected.

The cross-linked rubber according to the present invention thus obtained is obtained using the above-mentioned ring-opened polymer rubber according to the present invention, and therefore has excellent chipping resistance and sufficient wet grip properties. Owing to such properties, the cross-linked rubber according to the present invention can be used in a variety of applications to parts of tires such as cap treads, base treads, carcasses, sidewalls, and bead parts; materials for industrial products such as hoses, belts, mats, and antivibration rubbers; impact resistance improvers for resins; resin film buffer agents; shoe soles; rubber shoes; golf balls; toys; and the like, for example. In particular, the cross-linked rubber according to the present invention can be suitably used as a material for tires (e.g., material for heavy-load tires).

### EXAMPLES

Hereinafter, the present invention will be described in more details with reference to Examples, but these Examples should not be construed as limitations to the present invention. Hereinafter, the term "parts" is a weight basis unless otherwise specified weight. Tests and evaluations were performed as follows.

### <Weight average molecular weight (Mw)>

The weight average molecular weight (Mw) of the ring-opened polymer rubber and that of the petroleum resin were each measured against polystyrene standards by gel permeation chromatography (GPC) using tetrahydrofuran as a solvent. The measurement apparatus used was HLC-8320 GPC (available from Tosoh Corporation). The measurement was performed using four TSKgel SuperMultipore HZ-H (available from Tosoh Corporation) columns connected in series at a flow rate of 0.35 ml/min, a sample injection amount of 10 ml, and a column temperature of 40°C.

### <Monomer compositional ratio>

The monomer compositional ratio of the ring-opened polymer rubber and that of the petroleum resin were determined from ¹H-NMR spectrum measurement.

### <Glass transition temperature (Tg)>

According to JIS K7121, measurement was performed using a differential scanning calorimeter (DSC) at a heating rate of 10°C/min and at 0.13°C interval, and the glass transition temperature (Tg) of the ring-opened polymer rubber and that of the petroleum resin were determined from the DSC curves obtained.

### <Softening point>

The softening point of the petroleum resin was measured by a ringand-ball method specified by JIS K2531.

### <Chipping resistance>

The chipping resistance was evaluated based on tensile energy at break. A tensile test was performed on a sheet-like cross-linked rubber based on JIS K6251, and energy at break was determined from the area of the stress-distortion curve until breakage of the sheet-like cross-linked rubber. In Examples 1 to 4 and Comparative Examples 1 to 5 (Table 3), the chipping resistance was determined as an index where the energy at break in Comparative Example 2 was regarded as 100. In Examples 4 to 7 and Comparative Examples 6 to 8 (Table 4), the chipping resistance was determined as an index where the energy at break in Comparative Example 8 was regarded as 100. It can be determined that a larger value of the index indicates higher energy at break and more excellent chipping resistance.

### <Wet grip properties>

Using ARES available from Rheometrics Co., tanδ at 0°C of a sheet-like cross-linked rubber was measured at a dynamic strain of 0.5% and 10 Hz. In Examples 1 to 4 and Comparative Examples 1 to 5 (Table 3), the wet grip properties were determined as an index in which the measured value in Comparative Example 2 was regarded as 100. In Examples 4 to 7 and Comparative Examples 6 to 8 (Table 4), the wet grip properties were determined as an index where the measured value in Comparative Example 8 was regarded as 100. The index becomes larger as the wet grip properties are higher, and it can be determined that an index of 90 or higher indicates sufficient wet grip properties.

### <Production Example 1 (production of ring-opened polymer rubber 1)>

Under a nitrogen atmosphere, 77 parts of cyclopentene (CPE), 23 parts of dicyclopentadiene (DCPD), 297 parts of cyclohexane, and 0.048 parts of 1-hexene were added to a glass reactor equipped with a stirrer. Next, 0.024 parts of dichloro-(3-phenyl-1H-inden-1-ylidene)bis(tricyclohexylphosphine)ruthenium(II) dissolved in 3 parts of toluene was added, and a polymerization reaction was performed at 40°C for 2 hours. After the polymerization reaction, an excess of vinyl ethyl ether was added to terminate the polymerization.

The polymerization solution was poured to a large excess of methanol containing 2,6-di-t-butyl-p-cresol (BHT), and the precipitated polymer was recovered, washed with methanol, and then dried under vacuum at 50°C for 3 days to give a ring-opened polymer rubber 1. The resulting ring-opened polymer rubber 1 was measured for monomer compositional ratio, weight average molecular weight (Mw), glass transition temperature (Tg), and Mooney viscosity (ML(1+4) 100°C). The results are shown in Table 1.

### <Production Example 2 (production of ring-opened polymer rubber 2)>

Under a nitrogen atmosphere, 90 parts of cyclopentene (CPE), 10 parts of dicyclopentadiene (DCPD), 297 parts of cyclohexane, and 0.028 parts of 1-hexene were added to a glass reactor equipped with a stirrer. Next, 0.026 parts of dichloro-(3-phenyl-1H-inden-1-ylidene)bis(tricyclohexylphosphine)ruthenium(II) dissolved in 3 parts of toluene was added, and a polymerization reaction was performed at 40°C for 2 hours. After the polymerization reaction, an excess of vinyl ethyl ether was added to terminate the polymerization. The polymerization solution was poured to a large excess of methanol containing 2,6-di-t-butyl-p-cresol (BHT), and the precipitated polymer was recovered, washed with methanol, and then dried under vacuum at 50°C for 3 days to give a ring-opened polymer rubber 2. The resulting ring-opened polymer rubber 2 was measured for monomer compositional ratio, weight average molecular weight (Mw), glass transition temperature (Tg), and Mooney viscosity (ML(1+4) 100°C). The results are shown in Table 1.

### <Production Example 3 (production of ring-opened polymer rubber 3)>

Under a nitrogen atmosphere, 65 parts of cyclopentene (CPE), 35 parts of 2-norbornene, 297 parts of cyclohexane, and 0.066 parts of 1-hexene were added to a glass reactor equipped with a stirrer. Next, 0.024 parts of dichloro-(3-phenyl-1H-inden-1-ylidene)bis(tricyclohexylphosphine)ruthenium(II) dissolved in 3 parts of toluene was added, and a polymerization reaction was performed at 20°C for 2 hours. After the polymerization reaction, an excess of vinyl ethyl ether was added to terminate the polymerization. The polymerization solution was poured to a large excess of methanol containing 2,6-di-t-butyl-p-cresol (BHT), and the precipitated polymer was recovered, washed with methanol, and then dried under vacuum at 50°C for 3 days to give a ring-opened polymer rubber 3. The resulting ring-opened polymer rubber 3 was measured for monomer compositional ratio, weight average molecular weight (Mw), glass transition temperature (Tg), and Mooney viscosity (ML(1+4) 100°C). The results are shown in Table 1.

### <Production Example 4 (production of ring-opened polymer rubber 4)>

Under a nitrogen atmosphere, 100 parts of cyclopentene (CPE), 297 parts of cyclohexane, and 0.030 parts of 1-hexene were added to a glass reactor equipped with a stirrer. Next, 0.027 parts of dichloro-(3-phenyl-1H-inden-1-ylidene)bis(tricyclohexylphosphine)ruthenium(II) dissolved in 3 parts of toluene was added, and a polymerization reaction was performed at 20°C for 2 hours. After the polymerization reaction, an excess of vinyl ethyl ether was added to terminate the polymerization. The polymerization solution was poured to a large excess of methanol containing 2,6-di-t-butyl-p-cresol (BHT), and the precipitated polymer was recovered, washed with methanol, and then dried under vacuum at 50°C for 3 days to give a ring-opened polymer rubber 4. The resulting ring-opened polymer rubber 4 was measured for monomer compositional ratio, weight average molecular weight (Mw), glass transition temperature (Tg), and Mooney viscosity (ML(1+4) 100°C). The results are shown in Table 1.

### [Table 1]

**Table 1**

| | | | Production Ex. 1 | Production Ex. 2 | Production Ex. 3 | Production Ex. 4 |
|---|---|---|---|---|---|---|
| | | | Ring-opened polymer rubber 1 | Ring-opened polymer rubber 2 | Ring-opened polymer rubber 3 | Ring-opened polymer rubber 4 |
| Compositional ratio | Cyclopentene | wt% | 60 | 80 | 40 | 100 |
| | 2-Norbornene | wt% | 0 | 0 | 60 | 0 |
| | Dicyclopentadiene | wt% | 40 | 20 | 0 | 0 |
| Weight average molecular weight Mw | | - | 300,000 | 350,000 | 250,000 | 350,000 |
| Glass transition temperature Tg | | °C | -43 | -75 | -36 | -95 |
| Mooney viscosity ML (1+4) 100°C | | - | 100 | 100 | 70 | 65 |

### <Production Example 5 (production of petroleum resin 1)>

Under a nitrogen atmosphere, a mixture of 86 parts of dicyclopentadiene, 14 parts of isoprene, and 25 parts of xylene was charged into a polymerization reactor. The polymerization reactor was heated to 260°C, and polymerization was performed for 4 hours. Thereafter, the polymerization reactor was allowed to reach ambient temperature, and the polymerization reaction was terminated, giving a polymer solution containing a petroleum resin, unreacted monomers, and the like. Next, the polymer solution was transferred to a distillation still, in which the hydrocarbon solvent was removed by performing a stripping operation on the polymer solution under a nitrogen atmosphere by heating at 240°C for 1 hour. Thereby, a solid petroleum resin was obtained. Then, the resulting petroleum resin was measured for monomer compositional ratio, weight average molecular weight (Mw), softening point, and glass transition temperature (Tg) according to the above-mentioned methods. The results are shown in Table 2.

### <Production Examples 6 to 7 (production of petroleum resins 2 to 3)>

Petroleum resins 2 to 3 were prepared in the same manner as in Production Example 5 except that the types and amounts of the monomers used were varied as shown in Table 2. Then, the resulting petroleum resin was measured for monomer compositional ratio, weight average molecular weight (Mw), softening point, and glass transition temperature (Tg) according to the above-mentioned methods. The results are shown in Table 2.

### <Production Example 8 (production of petroleum resin 4)>

Under a nitrogen atmosphere, 75 parts of cyclopentane was charged into a polymerization reactor. The polymerization reactor was heated to 65°C, and then, 0.65 parts of aluminum chloride was added (mixture M1). Subsequently, polymerization was performed while temperature (65°C) was maintained over 60 minutes and a mixture a1 of 50 parts of 1,3-pentadiene and 50 parts of olefins fed through separate lines was being continuously added to the polymerization reactor containing the mixture M1. Thereafter, a sodium hydroxide aqueous solution was added to the polymerization reactor to terminate the polymerization reaction. A precipitate generated after the termination of the polymerization was removed by filtration, giving a polymer solution containing a petroleum resin, unreacted monomers, and the like. Next, the polymer solution was transferred to a distillation still, in which the hydrocarbon solvent was removed by performing a stripping operation on the polymer solution under a nitrogen atmosphere by heating at 250°C for 1 hour. Thereby, a solid petroleum resin was obtained. Then, the resulting petroleum resin was measured for monomer compositional ratio, weight average molecular weight (Mw), softening point, and glass transition temperature (Tg) according to the above-mentioned methods. The results are shown in Table 2.

### <Production Examples 9 to 10 (production of petroleum resins 5 to 6)>

Petroleum resins 5 to 6 were prepared in the same manner as in Production Example 8 except that the types and amounts of the monomers used were varied as shown in Table 2. Then, the resulting petroleum resin was measured in the same manner as in Production Example 5. The results are shown in Table 2.

To be noted, "Olefins" in Table 2 indicates a mixture of a noncyclic monoolefin and a monocyclic cycloolefin which contains cyclopentene and isobutylene as main components. "C9 fraction" in Table 2 indicates an aromatic monoolefin having 8 to 10 carbon atoms which contains styrene, α-methylstyrene, β-methylstyrene, vinyltoluene, and indene as main components.

### [Table 2]

**Table 2**

| | | | Production Ex. 5 | Production Ex. 6 | Production Ex. 7 | Production Ex. 8 | Production Ex. 9 | Production Ex. 10 |
|---|---|---|---|---|---|---|---|---|
| | | | Petroleum resin 1 | Petroleum resin 2 | Petroleum resin 3 | Petroleum resin 4 | Petroleum resin 5 | Petroleum resin 6 |
| Polymerization conditions | | | | | | | | |
| Polymerization method | | | Thermal polymerization | Thermal polymerization | Thermal polymerization | Cationic polymerization | Cationic polymerization | Cationic polymerization |
| Monomers | Dicyclopentadiene | parts | 86 | 52 | 57 | - | - | - |
| | Isoprene | parts | 14 | 15 | - | - | - | - |
| | 1,3-Pentadiene | parts | - | - | 10 | 50 | 40 | 42 |
| | Olefins | parts | - | - | - | 50 | 35 | 26 |
| | Styrene | parts | - | - | - | - | - | 32 |
| | C9 fraction | parts | - | 33 | 33 | - | 25 | - |
| Solvents | Cyclopentane | parts | - | - | - | 75 | 75 | 75 |
| | Xylene | parts | 25 | 25 | 25 | - | - | - |
| Catalyst | Aluminum chloride | parts | - | - | - | 0.7 | 0.7 | 0.7 |
| Reaction temperature | | °C | 260 | 260 | 260 | 65 | 65 | 65 |
| Reaction time | | h | 4 | 4 | 4 | 1 | 1 | 1 |
| Physical properties of petroleum resin | | | | | | | | |
| Compositional ratio | Dicyclopentadiene | wt% | 86 | 52 | 57 | - | - | - |
| | Isoprene | wt% | 14 | 15 | - | - | - | - |
| | 1,3-Pentadiene | wt% | - | - | 10 | 50 | 40 | 42 |
| | Olefins | wt% | - | - | - | 50 | 35 | 26 |
| | Styrene | wt% | - | - | - | - | - | 32 |
| | C9 fraction | wt% | - | 33 | 33 | - | 25 | - |
| Weight average molecular weight Mw | | - | 850 | 1100 | 1,500 | 2,100 | 1,800 | 2,400 |
| Softening point | | °C | 105 | 119 | 138 | 97 | 94 | 90 |
| Glass transition temperature Tg | | °C | 62 | 65 | 79 | 46 | 43 | 42 |

### <Comparative Example 1>

100 Parts of the ring-opened polymer rubber 1 was masticated with a Banbury mixer having a volume of 250 ml, to which 50 parts of carbon black (trade name "SEAST 9H", available from Tokai Carbon Co., Ltd.), 3 parts of zinc oxide (zinc oxide #1), 2 parts of stearic acid (trade name "SA-300", available from ADEKA Corporation), and 2 parts of an antioxidant (N-phenyl-N'-(1,3-dimethylbutyl)-p-phenylenediamine, trade name "NOCRAC 6C", available from Ouchi Shinko Chemical Industrial Co., Ltd.) were added, and were kneaded at a starting temperature of 80°C for 4 minutes. A rubber composition was discharged from the Banbury mixer. When the kneading was completed, the rubber composition had a temperature of 160°C. Next, the resulting rubber composition was kneaded with 1.75 parts of sulfur and 1 part of a cross-linking accelerator (N-cyclohexylbenzothiazole-2-sulfene, trade name "NOCCELER CZ-G(CZ)", available from Ouchi Shinko Chemical Industrial Co., Ltd.) in an open roll mill at 50°C, and thereafter, a sheet-like rubber composition was extracted. The resulting rubber composition was press cross-linked at 160°C for 13 minutes, preparing a sheet-like cross-linked rubber. The chipping resistance and wet grip properties were evaluated according to the above-mentioned methods. The results are shown in Table 3.

### <Comparative Example 2>

A rubber composition and a sheet-like cross-linked rubber were obtained in the same manner as in Comparative Example 1 except that carbon black, zinc oxide, stearic acid, and an antioxidant were added, and at the same time, 20 parts of T-DAE oil (available from NIPPON OIL CORPORATION, trade name "AROMAX T-DAE", aromatic process oil) was added. Evaluations were performed as in Comparative Example 1. The results are shown in Table 3.

### <Example 1>

A rubber composition and a sheet-like cross-linked rubber were obtained in the same manner as in Comparative Example 1 except that carbon black, zinc oxide, stearic acid, and an antioxidant were added, and at the same time, 10 parts of the petroleum resin 1 and 10 parts of T-DAE oil were added. Evaluations were performed as in Comparative Example 1. The results are shown in Table 3.

### <Examples 2 to 4, Comparative Examples 3 to 5>

Rubber compositions and sheet-like cross-linked rubbers were obtained in the same manner as in Example 1 except that the type of the petroleum resin was varied as shown in Table 3. Evaluations were performed as in Example 1. The results are shown in Table 3.

### <Examples 5 to 7, Comparative Examples 6 to 8>

Rubber compositions and sheet-like cross-linked rubbers were obtained in the same manner as in Example 1 except that the type of the rubber was varied as shown in Table 4. Evaluations were performed as in Example 1. To be noted, "SBR" in Table 4 indicates "Nipol(registered trademark) 1502" available from ZEON Corporation, "Natural rubber" in Table 4 indicates a CV60-grade natural rubber, and "Polybutadiene rubber" in Table 4 indicates "Nipol(registered trademark) BR1220" available from ZEON Corporation. The results of these and the results of Example 4 are shown in Table 4. In

Tables 3 and 4, the unit for the amounts of the components blended in the rubber composition is "part(s)".

### [Table 3]

**Table 3**

| | Comp. Ex. | | Ex. | | | | Comp. Ex. | | |
|---|---|---|---|---|---|---|---|---|---|
| | 1 | 2 | 1 | 2 | 3 | 4 | 3 | 4 | 5 |
| **Composition of rubber composition** | | | | | | | | | |
| Ring-opened polymer rubber 1 | 100 | 100 | 100 | 100 | 100 | 100 | 100 | 100 | 100 |
| Ring-opened polymer rubber 2 | | | | | | | | | |
| Ring-opened polymer rubber 3 | | | | | | | | | |
| Ring-opened polymer rubber 4 | | | | | | | | | |
| SBR | | | | | | | | | |
| Natural rubber | | | | | | | | | |
| Polybutadiene rubber | | | | | | | | | |
| Petroleum resin 1 | | | 10 | 20 | | | | | |
| Petroleum resin 2 | | | | | 20 | | | | |
| Petroleum resin 3 | | | | | | 20 | | | |
| Petroleum resin 4 | | | | | | | 20 | | |
| Petroleum resin 5 | | | | | | | | 20 | |
| Petroleum resin 6 | | | | | | | | | 20 |
| T-DAE oil | | 20 | 10 | | | | | | |
| Carbon black | 50 | 50 | 50 | 50 | 50 | 50 | 50 | 50 | 50 |
| Zinc oxide | 3 | 3 | 3 | 3 | 3 | 3 | 3 | 3 | 3 |
| Stearic acid | 2 | 2 | 2 | 2 | 2 | 2 | 2 | 2 | 2 |
| Antioxidant | 2 | 2 | 2 | 2 | 2 | 2 | 2 | 2 | 2 |
| Sulfur | 1.75 | 1.75 | 1.75 | 1.75 | 1.75 | 1.75 | 1.75 | 1.75 | 1.75 |
| Cross-linking accelerator | 1 | 1 | 1 | 1 | 1 | 1 | 1 | 1 | 1 |

| **Physical properties of cross-linked rubber** | | | | | | | | | |
|---|---|---|---|---|---|---|---|---|---|
| Chipping resistance | 94 | 100 | 126 | 138 | 128 | 127 | 98 | 103 | 104 |
| Wet grip properties | 97 | 100 | 131 | 188 | 213 | 191 | 206 | 211 | 228 |

### [Table 4]

**Table 4**

| | Ex. | | | | Comp. Ex. | | |
|---|---|---|---|---|---|---|---|
| | 4 | 5 | 6 | 7 | 6 | 7 | 8 |
| **Composition of rubber composition** | | | | | | | |
| Ring-opened polymer rubber 1 | 100 | | | | | | |
| Ring-opened polymer rubber 2 | | 100 | | | | | |
| Ring-opened polymer rubber 3 | | | 100 | | | | |
| Ring-opened polymer rubber 4 | | | | 100 | | | |
| SBR | | | | | 100 | | |
| Natural rubber | | | | | | 100 | |
| Polybutadiene rubber | | | | | | | 100 |
| Petroleum resin 1 | | | | | | | |
| Petroleum resin 2 | | | | | | | |
| Petroleum resin 3 | 20 | 20 | 20 | 20 | 20 | 20 | 20 |
| Petroleum resin 4 | | | | | | | |
| Petroleum resin 5 | | | | | | | |
| Petroleum resin 6 | | | | | | | |
| T-DAE oil | | | | | | | |
| Carbon black | 50 | 50 | 50 | 50 | 50 | 50 | 50 |
| Zinc oxide | 3 | 3 | 3 | 3 | 3 | 3 | 3 |
| Stearic acid | 2 | 2 | 2 | 2 | 2 | 2 | 2 |
| Antioxidant | 2 | 2 | 2 | 2 | 2 | 2 | 2 |
| Sulfur | 1.75 | 1.75 | 1.75 | 1.75 | 1.75 | 1.75 | 1.75 |
| Cross-linking accelerator | 1 | 1 | 1 | 1 | 1 | 1 | 1 |
| **Physical properties of cross-linked rubber** | | | | | | | |
| Chipping resistance | 134 | 138 | 159 | 150 | 105 | 95 | 100 |
| Wet grip properties | 343 | 105 | 331 | 98 | 210 | 116 | 100 |

Tables 3 and 4 show that the rubber compositions each comprising a ring-opened polymer rubber having a structural unit derived from a cycloolefin and a petroleum resin having a structural unit derived from a polycyclic aliphatic cycloolefin provided cross-linked rubbers having excellent chipping resistance (Examples 1 to 7).

In contrast, cross-linked rubbers having inferior chipping resistance were obtained when no petroleum resin was contained (Comparative Examples 1 to 2) or when a petroleum resin other than the petroleum resin having a structural unit derived from a polycyclic aliphatic cycloolefin was contained (Comparative Examples 3 to 5).
In addition, cross-linked rubbers having inferior chipping resistance were obtained when a rubber other than the ring-opened polymer rubber having a structural unit derived from a cycloolefin was contained (Comparative Examples 6 to 8) .

## Claims

1. A rubber composition comprising:
a ring-opened polymer rubber having a structural unit derived from a cycloolefin and having a glass transition temperature (Tg) of 0°C or lower; and
a petroleum resin having a structural unit derived from a polycyclic aliphatic cycloolefin and having a glass transition temperature (Tg) of 10°C or higher.

2. The rubber composition according to claim 1, wherein the petroleum resin has a structural unit derived from dicyclopentadiene as the structural unit derived from a polycyclic aliphatic cycloolefin.

3. The rubber composition according to claim 2, wherein the petroleum resin contains 20% by weight or more of the structural unit derived from dicyclopentadiene.

4. The rubber composition according to any one of claims 1 to 3, wherein the ring-opened polymer rubber has a structural unit derived from cyclopentene as the structural unit derived from a cycloolefin.

5. The rubber composition according to claim 4, wherein the ring-opened polymer rubber contains 20% by weight or more of the structural unit derived from cyclopentene.

6. The rubber composition according to any one of claims 1 to 5, wherein the ring-opened polymer rubber has a structural unit derived from a norbornene compound as the structural unit derived from a cycloolefin.

7. The rubber composition according to claim 6, wherein the ring-opened polymer rubber contains 15% by weight or more of the structural unit derived from a norbornene compound.

8. The rubber composition according to any one of claims 1 to 7, wherein the petroleum resin is contained in an amount of 1 to 50 parts by weight relative to 100 parts by weight of a rubber component containing the ring-opened polymer rubber.

9. The rubber composition according to any one of claims 1 to 8, further comprising a filler.

10. The rubber composition according to any one of claims 1 to 9, further comprising a cross-linking agent.

11. A cross-linked rubber prepared by cross-linking the rubber composition according to any one of claims 1 to 10.

12. A tire comprising the cross-linked rubber according to claim 11.
